# FASCICULE DE BREVET EUROPEEN

(11) **EP 0 311 535 B1**
(45) Date de publication et mention de la délivrance du brevet: **10.02.1993**
(21) Numéro de dépôt: 88420333.2
(22) Date de dépôt: 05.10.1988
(51) Int. Cl.: G01B 5/00, B21D 1/14

(54) **Marbre pour le montage, le contrôle et la réparation de carrosseries de véhicules automobiles notamment**
Richtbank für die Montage, Überwachung und Reparatur, insbesondere von Karrosserien von Kraftfahrzeugen
Bench, especially for fitting, controlling and repairing motor vehicle bodies

(30) Priorité: 06.10.1987 FR 8714149
(43) Date de publication de la demande: 12.04.1989
(73) Titulaire: ATLANTIC NV, B-8850 Ardooie (BE)
(72) Inventeur: Peyret, Lucien, Les Bruneaux, 42700 Firminy (FR)
(74) Mandataire: Dupuis, François

(56) Documents cités:
- EP-A- 0 180 465
- DE-A- 2 745 807
- FR-A- 2 384 229
- FR-A- 2 432 639
- FR-A- 2 432 640
- FR-A- 2 511 272
- GB-A- 2 019 573
- GB-A- 2 098 522

## Description

Corollairement, entrent dans le cadre de l'invention les accessoires susceptibles d'équiper ce marbre.

L'objet de l'invention se rattache au secteur technique des matériels pour la réparation et la construction des carrosseries de véhicules et autres.

Il est bien connu d'utiliser pour la réparation et le montage de carrosserie de véhicules, des bancs ou marbres de contrôle. Généralement et principalement, ces marbres présentent au moins deux longerons porteurs rectifiés, avec ou sans moyen de roulement. Sur ces longerons sont fixés des traverses recevant des organes supports de positionnement et de montage pour les différentes parties ou éléments de carrosserie. Les longerons peuvent aussi être agencés pour permettre le montage des pinces d'ancrage réglables en hauteur. A titre d'exemple indicatif nullement limitatif, on peut citer le brevet français 2.423.748 qui enseigne un marbre de ce type.

Cependant de tels marbres présentent certains inconvénients. En effet, eu égard à leur configuration, l'accès de certaines parties de la carrosserie pour exécuter une tâche spécifique est mal aisé voire impossible. Ce problème est encore aggravé lorsque les différents organes support et autres éléments sont montés sur le marbre. En effet, s'il est possible de fixer ces organes ou éléments selon différents positionnements grâce à plusieurs points d'ancrage, il n'est pas commode de les escamoter ou de les déplacer temporairement en fonction du travail à exécuter.

Un autre inconvénient apparaît au niveau de la fixation de certains éléments sur le marbre qui s'avére longue et fastidieuse.

Par le document EP-A-0180465, on connaît un appareil du type marbre dont les extrémités transversales présentent des moyens d'entretoisement et de rigidité, ces moyens sont disposés en retrait de l'extrémité des longerons du marbre, de sorte qu'il subsiste un espace libre facilitant l'accès à la partie centrale du marbre.

A noter cependant que ces éléments entretoise ne sont pas escamotables, de sorte que l'accès est malgré tout, limité. En outre, la conception de ce type de marbre est relativement compliquée.

On connaît également des marbres du type de ceux divulgués par l'enseignement du brevet GB 2098522. Le marbre définit dans ce document présente des longerons conformés pour faire office de rail de guidage pour le montage avec capacité de déplacement latéral d'organes du type traverse. Cette conformation particulière des longerons tend à affaiblir la rigidité de l'ensemble du marbre. Par ailleurs, les extrémités de ces longerons présentent en bout, des traverses faisant office d'entretoise interdisant tout accès dans l'espace libre situé entre lesdits longerons.

L'invention s'est fixée pou but de remédier à ces inconvénients, d'une manière simple et efficace.

Le problème que se propose de résoudre l'invention est de concevoir un marbre de contrôle ayant une grande rigidité, avec des agencements spécifiques permettant d'avoir à volonté, un accès aisé aux différents éléments de la carrosserie à travailler, tout en permettant le montage simple, rapide et efficace des différents accessoires et éléments devant équiper le marbre.

Pour résoudre un tel problème, il a été conçu et mis au point un marbre du type de ceux comprenant principalement deux longerons parallèles agencés pour recevoir directement ou par des moyens rapportés du type traverse des organes d'appui, de positionnement et de montage pour les différentes parties de la carrosserie, les extrémités transversales du marbre étant équipées de moyens d'entretoisement et de rigidité.

Selon l'invention les moyens sont constitués par un fer profilé monté en bout des longerons d'une manière démontable, avec capacité de pivotement angulaire par rapport à l'un ou l'autre desdits longerons pour donner un libre accès à la partie avant et/ou à la partie arrière du mabre entre les deux longerons.

Le marbre tel que défini est également remarquable par les caractéristiques ci-après :
- chacun des longerons est conformé pour constituer une partie médiane qui apparait en retrait par rapport à chacune des parties d'extrémité dudit longeron.
- les faces latérales externes des longerons sont constituées directement ou d'une manière rapportée par un rail de guidage apte à recevoir avec capacité de positionnement en translation réglable, des organes d'appui, de positionnement, de montage et autres.
- le rail de guidage a une section transversale en C, apte à recevoir à libre coulissement, une semelle solidaire d'un axe conformé pour permettre les fixations, par un système à clavettes, des organes d'appui, de positionnements, de montage et autres.
- chacune des parties d'extrémité correspondantes de chaque longeron est fixée perpendiculairement en bout d'une traverse pour délimiter (vue en plan) une ouverture en U, les ouvertures en U relatives à chaque extrémité étant reliées et entretoisées par la partie médiane fixée perpendiculairement aux traverses, dans un plan parallèle et décalé par rapport à celui défini par lesdites parties d'extrémité.
- la face de dessus de chacun des longerons, présente sur la totalité de la longueur et dans un même alignement rectiligne, un chemin de roulement apte à recevoir des supportssous forme d'étriers conformés pour permettre le montage et le positionnement des traverses notamment.
- l'étrier support a une section en U pour assurer par paire le centrage et le positionnement de la section complémentaire rectangulaire des traverses, chaque étrier étant équipé d'organes de roulement coopérant avec le chemin qui est une rainure.

Avantageusement, le marbre tel que défini selon l'invention, est équipé de traverses modulaires et de semelles amovibles constituées d'éléments tubulaires de section rectangulaire, les semelles étant de forme générale en L avec deux ailes de longueurs inégales, tandis que les semelles d'appui ont une forme générale en T asymétrique dont les branches sont de longueurs inégales.

A partir de cette conception de base du marbre de contrôle, il a été possible de concevoir des agencements particuliers pour certains organes ou éléments supports de position-nement ou autres, en vue de leur adaptation rapide sur le marbre, d'une part, et de leur réglage d'autre part. En outre, on a voulu augmenter encore les possibilités de réglage et de positionnement simplement en fonction du choix de l'orientation des organes ou éléments support résultant d'une conformation spécifique et originale.

L'invention est exposée ci-après plus en détail à l'aide des dessins annexés dans lesquels :

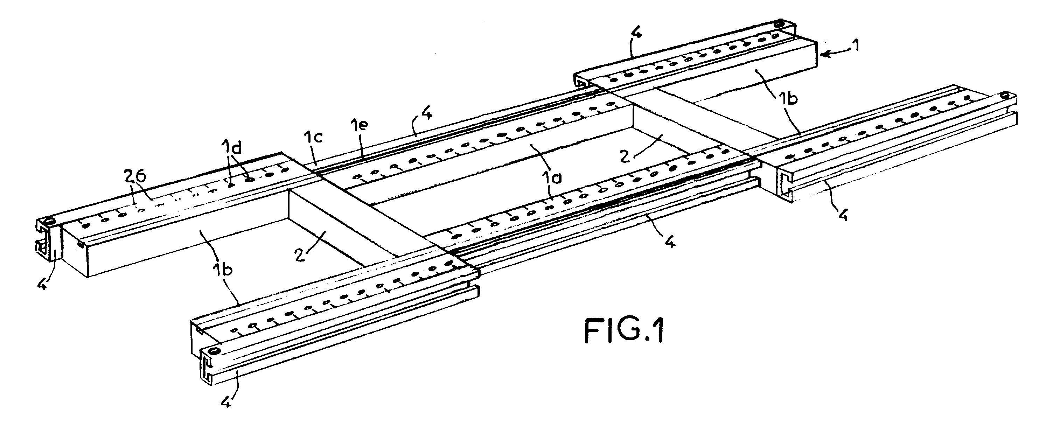

- la figure 1 est une vue en perspective du marbre seul, c'est-à-dire sans aucun élément ou organe support apte à assurer une fonction donnée,

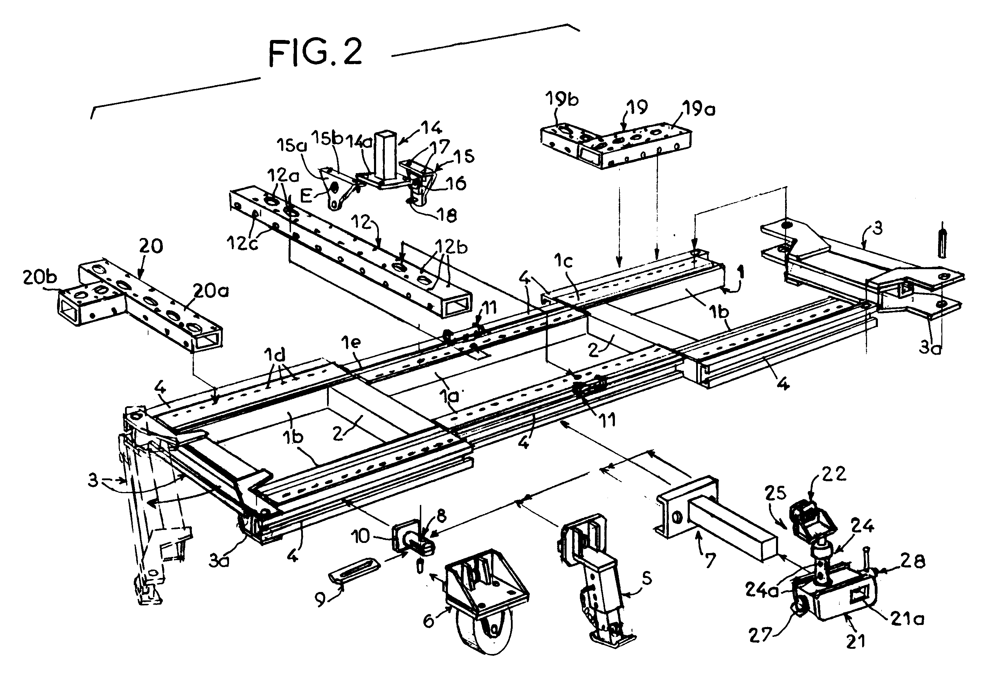

- la figure 2 est une vue en perspective correspondant à la figure 1, le marbre étant équipé de plusieurs éléments ou organes supports, représentés séparément,

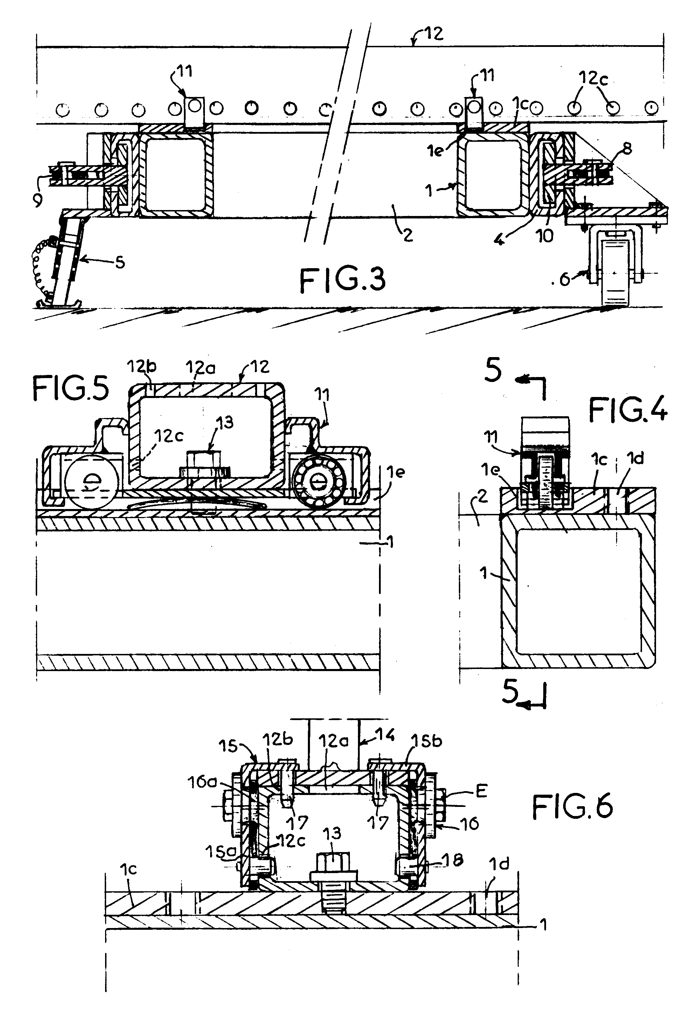

- la figure 3 est une vue partielle en coupe transversale illustrant d'un côté le montage d'une roue et de l'autre le montage d'un pied d'appui sur le rail de guidage,
- la figure 4 est une vue en coupe illustrant le montage de l'étrier-support dans la rainure des longerons, avant fixation de la traverse amovible,
- la figure 5 est une vue en coupe considérée suivant la ligne 5.5. de la figure 4, la traverse amovible étant mise en place et bloquée,
- la figure 6 est une vue en coupe partielle montrant la fixation d'un élément support sur une traverse amovible,
- la figure 7 est une vue en coupe partielle illustrant un caisson porte-pince adapté en bout d'un bras-support, selon une première forme de réalisation,
- la figure 8 est une vue en coupe montrant une forme de réalisation du caisson support porte pince selon une forme de réalisation.

Le marbre ou banc de contrôle est composée, d'une manière connue, de deux longerons parallèles (1) entretoisés par des traverses (2). Selon l'invention, les extrémités transversales du marbre sont conformées directement ou par des moyens rapportés (3) pour donner un libre accès à la partie avant et ou arrière dudit marbre, entre les deux longerons (1).

Chacun des longerons (1) est en outre conformé pour constituer une partie médiane (1a) qui apparaît en retrait de part et d'autre de chacune des parties d'extrémité (1b) du longeron. Dans une forme de réalisation préférée illustrée aux figures des dessins, chacune des parties d'extrémité (1b) est fixée perpendiculairement en bout de la traverse (2), pour délimiter (vue en plan) une ouverture en U.

Ces deux ouvertures en U qui constituent les extrémités transversales du marbre, sont reliées et entretoisées entre elles par la partie médiane (1a) fixée perpendiculairement à chacune des traverses (2) dans un plan parallèle et décalé par rapport a celui défini par les parties d'extrémité (1b) pour former ainsi un décrochement.

Chacune des ouvertures en U ainsi définie est susceptible d'être fermée temporairement par le moyen (3) sous forme d'un fer profilé apte à assurer la rigidité et l'entretoisement des extrémités des longerons (1). Ce fer (3) est monté en bout des longerons (1) d'une manière démontable avec capacité de pivotement angulaire par rapport à l'un ou l'autre des longerons.

Dans ce but, chacune des extrémités du fer (3) présente une chape (3a) pour être articulée au moyen d'un axe goupille par exemple en bout des longerons (1). Plus particulièrement, chaque chape (3a) coopère avec les extrémités d'un rail de guidage (4) fixé sur la face latérale externe de l'ensemble du longeron en incluant par conséquent les parties d'extrémité (1b) et la partie médiane (1a).

Ce rail de guidage (4) a une section transversale en C pour permettre en combinaison avec des agencements complémentaires, le montage coulissant et le positionnement en translation, d'une manière réglable, d'organes d'appui, de roulement et autres, comme il sera indiqué dans la suite de la description. D'une manière importante, le longeron (1) et la traverse (2) sont constitués par des éléments tubulaires de section transversale carrée ou rectangulaire pour leur conférer une grande résistance.

Le montage coulissant des différents organes tels que roues (6), bras support (7), pied d'appui (5)..., s'opère au moyen par exemple d'un axe fendu (8) coopérant avec une clavette (9), ledit axe étant solidaire d'une semelle (10) apte à être engagée à l'intérieur de la section en C du rail (4).

La face de dessus (1c) des longerons (1) est rectifiée et présente d'une manière connue, à intervalles réguliers et selon des écartements déterminés, une pluralité de trous taraudés (1d) pour la fixation de traverses modulaires (12) comme indiqué ci-après.

Suivant une autre caractéristique importante de l'invention, la face de dessus (1c) des longerons présente sur la totalité de sa longueur et dans un même alignement rectiligne, un chemin de roulement (1e) constitué par une rainure. Cette rainure (1e) est apte à recevoir à libre coulissement, un étrier support (11) équipé d'organes de roulement, en étant conformé pour permettre, deux à deux, le montage et le positionnement des traverses modulaires (12) notamment.

Les étriers (11) ont une section en U déterminée pour permettre le centrage et le positionnement de la section complémentaire des traverses (12), qui, d'une manière connue, est rectangulaire. Ces traverses (12) sont destinées à être fixées transversalement sur le marbre selon différentes positions. A cet égard, des ouvertures circulaires notamment (12a) de grand diamètre, sont formées dans l'épaisseur de la face de dessus des traverses en alignement avec des ouvertures de plus petit diamètre établies dans l'épaisseur de la face de dessous des traverses pour correspondre avec les trous taraudés (1d) du longeron en vue respectivement du passage d'organes d'assemblage (13) du type boulon et de leur positionnement.

A noter que sous l'effet de serrage des traverses (12), les organes de roulement de l'étrier de centrage (11) sont escamotés pour assurer un blocage parfait et efficace. Il apparaît donc que chaque traverse (12) coopérant avec une paire d'étrier support (11) peut facilement être déplacée latéralement le long des longerons (1) en fonction de son positionnement désiré.

D'une manière connue, ces traverses sont destinées au montage de supports (14) aptes à recevoir, directement ou d'une manière rapportée, une tête spécifique. Ces supports (14) présentent une semelle (14a) dont les angles sont percés de trous en correspondance avec une pluralité de trous (12b) formés dans l'épaisseur de la face de dessus des traverses (12). Selon l'invention, la fixation du support s'opère au moyen des deux brides indépendantes et identiques (15) munies chacune d'un système excentrique (16).

Cette bride est formée à partir d'un plan vertical d'appui (15a) coopérant avec les faces verticales de la traverse et dont la partie supérieure présente deux pattes recourbées (15b) munies chacune d'un pion de centrage (17) aptes à coopérer avec les trous de la semelle et des traverses (12). De même, la partie inférieure du plan d'appui (15a) présente, d'une manière équidistante aux deux pions (17), un pion (18) apte à coopérer avec des trous (12c) formés dans l'épaisseur des faces latérales des traverses (12), en partie basse de ces dernières.

Le système excentrique (16) est établi à partir d'un disque (16a) manoeuvrable à partir de l'extérieur du plan (15a) au moyen d'une clé coopérant bar exemple avec écrou (E) solidaire dudit disque apte à créér, lorsqu'il est déplacé angulairement, un effet de coincement en combinaison avec les différents pions (17) et (18). Il en résulte une fixation sûre et efficace du support (14) sur la traverse (12), cette fixation étant, de plus effectuée d'une manière très rapide, car il suffit d'agir sur l'écrou (E) d'un quart de tour environ.

Suivant une autre caractéristique, on prévoit d'équiper la partie avant du marbre de semelles amovibles (19) de forme générale en L et constituées, de la même manière que les traverses (12), par des éléments tubulaires de section rectangulaire. Les deux ailes (19a) et (19b) du L sont de longueurs différentes, ce qui permet, en fonction de leur positionnement sur le marbre, plusieurs possibilités d'utilisation.

D'une manière identique aux traverses (12), ces semelles en L (19) sont agencées en (19a) pour être fixées en combinaison avec les trous taraudés des longerons (1) et présentent les agencements pour le montage des brides de serrage (15).

En ce qui concerne la partie arrière du marbre, il est prévu de fixer sur les longerons, notamment les parties d'extrémités (1b), des semelles amovibles (20) de forme générale en T asymétrique. Ces semelles (20) ont très rigoureusement la même conformation et le même agencement que les semelles (19) et (12). Les deux branches (20a) et (20b) du T sont de longueurs inégales.

D'une manière connue, ces différentes semelles (19) et (20) permettent par exemple le montage des organes supports (14) selon des positions variées par rapport aux longerons du marbre.

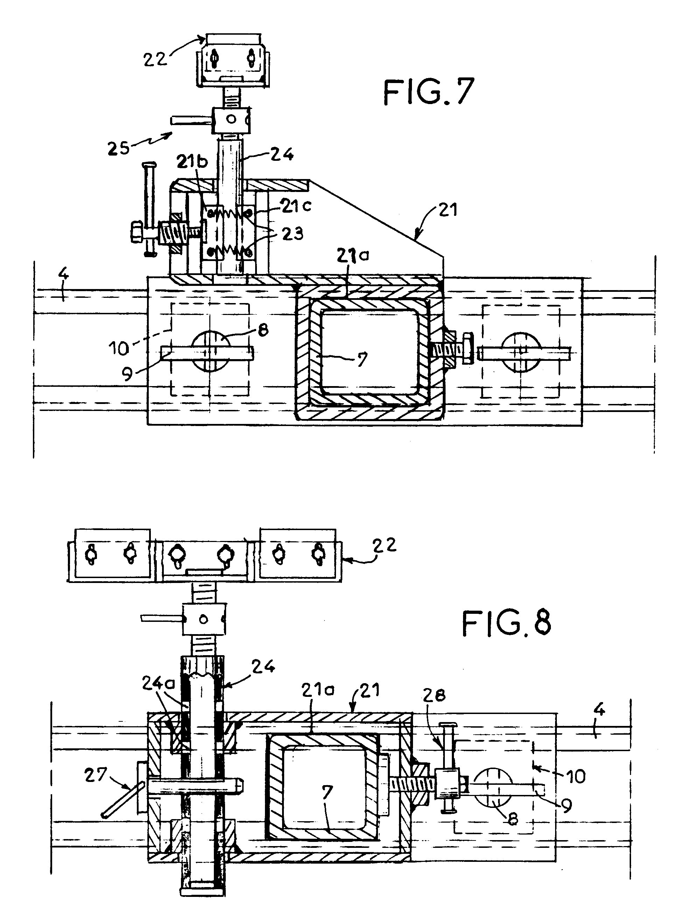

Comme le montrent les figures des dessins, les traverses (12) et les bras supports (7) peuvent être avantageusement équipés de caissons (21) et agencés pour permettre le montage de pinces de serrage (22) avec capacité de réglage rapide en hauteur desdites pinces. A cet effet, le caisson (21) présente une ouverture (21a) de section complémentaire à celle des traverses et du bras support (figure 8). Cette ouverture d'engagement (21a) peut être déportée par rapport au corps du caisson (figure 7), afin de lui conférer, selon son orientation, différentes positions en hauteur.

Dans la forme de réalisation de la figure 7, le corps du caisson est constitué par des mors mobiles (21b) et (21c) assujettis à des ressorts (23) pour être déplacés concomitamment en rapprochement ou en éloignement au moyen d'un système de manoeuvre à vis . La pince de serrage (22) de conception connue est montée en bout d'un tube (24) en étant assujettie à des moyens (25) pour être réglée en hauteur, d'une manière précise. Ces différents moyens (25) peuvent être constitués par exemple, par des systèmes vis-écrou, vérin à vis et autres. Ces dispositions de la pince combinée avec la conception du caisson (21) permettent à la fois un réglage rapide et précis.

Dans la réalisation de la figure 8, l'ouverture (21a) du caisson (21) n'est pas déportée, tandis que le tube (24) support de pince est simplement monté à libre coulissement à l'intérieur dudit caisson avec capacité de blocage en hauteur selon différentes positions au moyen, par exemple, d'une goupille (27) apte à coopérer avec une pluralité de trous (24a) décalés en hauteur. Quelle que soit la forme de réalisation du caisson, un moyen de blocage (28) assure la fixation de l'ensemble sur l'organe support.

Après avoir engagé le tube (24) équipé de la pince (22) entre les deux mors (21b) et (21c) ou directement à l'intérieur du caisson, il suffit de positionner l'ensemble très sensiblement à la hauteur désirée, cette opération s'effectuant par simple coulissement du tube (24). Après avoir bloqué en position le tube (24) (au moyen des mors (21b) et (21c) ou du système à goupille (27)), on agit sur le système de réglage (25) de la pince (22) pour la positionner très exactement à la hauteur désirée.

Suivant une autre caractéristique, des repères chiffrés (26) sont disposés en regard de chacun des trous (1d) des longerons (1) et des trous (12c), des traverses (12), et des différents types de semelles (19) et (20). Il est donc possible de positionner très précisément et très rapidement les différents accessoires et organes sur les parties correspondantes du marbre et/ou des traverses et semelles.

Bien évidemment, le marbre selon l'invention est équipé directement ou d'une manière rapportée, d'organes d'arrimage, selon des conceptions classiques et connues. En outre, la poignée qui sert à manoeuvrer l'équerre hydraulique de redressement, peut avantageusement coopérer avec le rail de guidage du marbre en vue de son déplacement.

Les avantages ressortent bien de la description. En particulier, on souligne :
- la possibilité d'avoir un accès à l'intérieur des parties avant et arrière du marbre, permet un accès plus aisé aux parties de la carrosserie à traiter. Il en est de même pour la conformation particulière des longerons ;
- les différents agencements du marbre qui permettent de positionner très facilement et rapidement les organes et accessoires devant l'équiper avec en outre la possibilité de changer très rapidement les positionnements par simple coulissement, afin de dégager au maximum l'accès au marbre en fonction du travail à effectuer ;
- le serrage rapide des organes supports sur les traverses et les semelles,
- la facilité et rapidité de réglage en hauteur des pinces de serrage au moyen de caissons supports spéciaux,
- le caractère fonctionnel de l'ensemble du marbre permettant une utilisation sûre et efficace avec des temps d'intervention réduits résultant de la rapidité de pose de certains accessoires,
- la rigidité accrue à la résistance du marbre comptetenu de la réalisation des longerons sous forme de poutres tubulaires de section rectangulaire ou carrée.

## Revendications

1. Marbre pour le montage, le contrôle et la réparation de carrosseries de véhicules automobiles notamment, comprenant principalement deux longerons parallèles (1) agencés pour recevoir directement ou par des moyens rapportés du type traverse des organes d'appui, de positionnement et de montage pour les différentes parties de la carrosserie, les extrémités transversales du marbre étant équipées de moyens d'entretoisement et de rigidité (3), caractérisé en ce que les moyens (3) sont constitués par un fer profilé monté en bout des longerons (1) d'une manière démontable, avec capacité de pivotement angulaire par rapport à l'un ou l'autre desdits longerons pour donner un libre accès à la partie avant et/ou à la partie arrière du marbre entre les deux longerons.

2. Marbre selon la revendication 1, caractérisé en ce que chacun des longerons (1) est conformé pour constituer une partie médiane (1a) qui apparait en retrait par rapport à chacune des parties d'extrémité (1b) dudit longeron.

3. Marbre selon la revendication 2, caractérisé en ce que les faces latérales externes des longerons (1) sont constituées directement ou d'une manière rapportée par un rail de guidage (4) apte à recevoir avec capacité de positionnement en translation réglable, des organes d'appui, de positionnement, de montage et autres.

4. Marbre selon la revendication 1, caractérisé en ce que la face de dessus (1c) de chacun des longerons présente sur la totalité de la longueur et dans un même alignement rectiligne, un chemin de roulement (1e) apte à recevoir des supports (11) sous forme d'étriers conformés pour permettre le montage et le positionnement des traverses (12) notamment.

5. Marbre selon la revendication 2, caractérisé en ce que chacune des parties d'extrémité correspondantes (1b) de chaque longeron est fixée perpendiculairement en bout d'une traverse (2) pour délimiter (vue en plan) une ouverture en U, les ouvertures en U relatives à chaque extrémité étant reliées et entretoisées par la partie médiane (1a) fixée perpendiculairement aux traverses (2), dans un plan parallèle et décalé par rapport à celui défini par lesdites parties d'extrémité.

6. Marbre selon la revendication 1, caractérisé en ce que les extrémités dudit fer (3) présentent une chape (3a) agencée pour être articulée en bout de chacun des rails de guidage (4).

7. Marbre selon la revendication 3, caractérisé en ce que le rail de guidage (4) a une section transversale en C, apte à recevoir à libre coulissement, une semelle (10) solidaire d'un axe (8) conformé pour permettre les fixations, par un système à clavettes, des organes d'appui, de positionnements, de montage et autres.

8. Marbre selon la revendication 4, caractérisé en ce que l'étrier support (11) a une section en U pour assurer par paire le centrage et le positionnement de la section complémentaire rectangulaire des traverses (12), chaque étrier étant équipé d'organes de roulement coopérant avec ledit chemin (1e) de roulement qui est une rainure.

9. Marbre selon la revendication 1, équipé de traverses modulaires (12) et de semelles amovibles (19) et (20) constituées d'éléments tubulaires de section rectangulaire, caractérisé en ce que les semelles (19) sont de forme générale en L avec deux ailes (19a) et (19b) de longueurs inégales, tandis que les semelles d'appui (20) ont une forme générale en T asymétrique dont les branches (20a) et (20b) sont de longueurs inégales.

10. Marbre selon la revendication 10, dont les traverses (12) et/ou les semelles (19) et (20) présentent, d'une manière connue, une pluralité de trous (12b) formés dans l'épaisseur de leurs faces de dessus en correspondance avec des trous percés dans les quatre angles d'une semelle (14a) d'organes supports (14), caractérisé en ce que les traverses et les semelles présentent dans chacune de leurs faces latérales, des trous débouchants établis en partie basse d'une manière équidistante aux deux trous correspondant à ceux d'une semelle, lesdits trous étant aptes à recevoir des pions (17) et (18) que présente une bride de serrage (15) équipée d'un système à serrage rapide du type à excentrique (16).

11. Marbre selon la revendication 10, caractérisé en ce que la bride (15) est formée à partir d'un plan vertical d'appui (15a) coopérant avec les faces verticales de leurs traverses (12) et/ou semelles (19-20), la partie supérieure dudit plan présentant deux pattes recourbées (15b) munies chacune du pion (17) coopérant avec les trous formés sur la face de dessus des traverses, tandis que sa partie inférieure présente le pion (18) coopérant avec le trou formé en partie basse des faces latérales desdites traverses, le système excentrique (16) comprenant un disque (16a) manoeuvrable à partir de l'extérieur, pour être déplacé angulairement en vue de créer un effet de coincement en combinaison avec lesdit pions.

12. Marbre selon l'une quelconque des revendication 1 et 9, caractérisé en ce que la traverse (12) et/ou bras support (7) montés en combinaison avec les longerons, sont équipés de caissons (21) avec des moyens pour assurer le positionnement et le réglage en hauteur rapide des pinces de serrage (22), ledit caisson (21) présentant une ouverture (21a) de section complémentaire à celle des traverses et des bras supports, ladite ouverture étant déportée ou non par rapport au corps du caisson.

13. Marbre selon la revendication 12, caractérisé en ce que les moyens sont des mors (21a) et (21b) de serrage assujettis à des organes élastiques asservis à des moyens de commande pour être déplacés relativement l'un par rapport à l'autre, pour assurer le serrage d'un tube (24) équipé dans sa partie haute de la pince en étant en outre agencé avec des moyens de commande aptes à assurer le réglage précis en hauteur de ladite pince.

14. Marbre selon la revendication 12, caractérisé en ce que les moyens sont constitués par une goupille (27) apte à coopérer avec une pluralité de trous (24a) décalés en hauteur et formés dans l'épaisseur d'un tube (24) engagé à libre coulissement à l'intérieur du caisson (21), ledit tube (24) étant équipé dans sa partie haute de la pince en étant en outre agencé avec des moyens de commande aptes à assurer le réglage précis en hauteur de ladite pince.

15. Marbre selon la revendication 1, dont les longerons sont percés de trous taraudés pour le montage des traverses notamment, caractérisé en ce que des repères (26) sont disposés en regard de chacun des trous (1d) et des trous formés en partie basse des faces latérales des traverses (12) et/ou des semelles (19-20).

16. Marbre selon la revendication 1, caractérisé en ce que les longerons sont exécutés à partir d'éléments tubulaires de section carrée ou rectangulaire.

## Claims

1. Modular carriage for the assembly, inspection or repair of bodywork of namely automobile vehicles, mainly comprising two parallel side members (1) fitted out to take either directly or by built up means of the cross member type, support, positioning and assembly components for different parts of bodywork, the transversal ends of the modular carriage being equipped with bracing and stiffening means (3), wherein the means (3) are made up of a profile mounted at the end of the side members (1) in a dismantable manner, capable of angular pivoting with respect to either side member to give free access to the front part and/or the rear part of the modular carriage between the two side members.

2. Modular carriage according to claim 1, wherein each side member (1) is designed to make up a median part (1a) which is located further back from each end part (1b) of the said side member (1).

3. Modular carriage according to claim 2, wherein the external side faces of the side members (1) are either made up directly or in a built up manner by a guide rail (4) likely to take, with the capacity of adjustable positioning in translation, support, positioning, assembly and other components.

4. Modular carriage according to claim 1, wherein the top face (1c) of each side member has, along the whole length and in the same rectilinear alignment, a runway (1e) likely to take supports (11) in the form of stirrups designed to allow for namely cross members (12) to be assembled and positioned.

5. Modular carriage according to claim 2, wherein each end part corresponding (1b) to each side member is perpendicularly fixed to the end of a cross member (2) to limit (plan view) a U-shaped opening, the U-shaped openings relating to each end being connected and braced by the median part (1a) perpendicularly fixed to the cross members (2), in a plane parallel and offset with respect to the one defined by the said end parts.

6. Modular carriage according to claim 1, wherein the ends of the said profile (3) have a yoke (3a) equipped so as to be hinged at the end of each guide rail (4).

7. Modular carriage according to claim 3, wherein the guide rail (4) has a C-shaped transversal cross section, likely to take, in a free sliding manner, a shoe (10) integral to a bolt (8) designed to allow support, positioning, assembly and other components to be fixed by a key type system.

8. Modular carriage according to claim 4, wherein the support stirrup (11) had a U-shaped cross section to provide per pair, the centering and positioning of the complementary rectangular cross section of the cross members (12), each stirrup being equipped with running components cooperating with the runway (1e) which is a groove.

9. Modular carriage according to claim 1, equipped with modular cross members (12) and removable shoes (19) and (20) made up of tubular elements of a rectangular cross section, wherein the shoes (19) are of a general L-shape with two wings (19a) and (19b) of unequal lengths, whereas the support shoes (20) have a general asymmetrical T-shape, the legs (20a) and (20b) of which are of unequal lengths.

10. Modular carriage according to claim 9, the cross members (12) of which and/or shoes (19) and (20), have, in a known manner, a plurality of holes (12b) formed in the thickness of their top faces in register with the holes drilled in the four corners of a shoe (14a) of support components (14), wherein the cross members and shoes have, in each of their side faces, breaking through holes made out in the bottom part, in an equally distanced manner to the two holes in register with those of a shoe, the said holes being likely to take dowels (17) and (18) which have a clamp (15) equipped with a quick-action clamping system of the eccentric type (16).

11. Modular carriage according to claim 10, wherein the clamp (15) is formed from a vertical support plane (15a) cooperating with the vertical faces of their cross members (12) and/or shoes (19-20), the top part of the said plane having two bent lugs (15b) each provided with a dowel (17) cooperating with the holes formed on the top face of the cross members, wherein its bottom part has a dowel (18) cooperating with the hole formed in the bottom part of the side faces of the said cross members, the eccentric system (16) comprising a disk (16a) which can be operated from the outside, so as to be angularly moved with a view to creating a jamming effect in combination with the said dowels.

12. Modular carriage according to any one of claims 1 and 9, wherein the cross member (12) and/or support arm (7) mounted in combination with the side members are equipped with boxes (21) with means to provide the positioning and quick height adjustment of clamps (22), the said box (21) having an opening (21a) with a cross section complementary to that of the cross members and support arms, the said opening being either offset or not with respect to the box body.

13. Modular carriage according to claim 12, wherein the means are clamping jaws (21a) and (21b) fixed to elastic components servocontrolled by control means so as to be moved in respect to one another, to clamp a tube (24), the top part of which is fitted with the clamp and being equipped with control means likely to provide precise height adjustment of the said clamp.

14. Modular carriage according to claim 12, wherein the means are made up of a pin (27) likely to cooperate with a plurality of holes (24a) offset in height and formed in the thickness of a tube (24) freely sliding inside the box (21), the said tube (24) being equipped in the top part with the clamp and with control means likely to provide precise height adjustment of the said clamp.

15. Modular carriage according to claim 1, the side members of which are drilled with tapped holes for the assembly of namely cross members, wherein marks (26) are arranged in front of each hole (1d) and holes formed in the bottom part of the side faces of the cross members (12) and/or shoes (19/20).

16. Modular carriage according to claim 1, wherein the side members are executed from tubular components with a square or rectangular cross section.

## Patentansprüche

1. Richtsystem für die Montage, Kontrolle und Reparatur von insbesondere Fahrzeug-Karosserien mit hauptsächlich zwei parallelen Längsträgern (1), die ausgestattet sind zur direkten oder über angebaute Mittel wie beispielsweise Querträger erfolgenden Aufnahme von Stütz-, Positionier- und Montageorganen für die einzelnen Karosserieteile, wobei die quergerichteten Enden des Richtsystems mit Mitteln zur Verstrebung und Versteifung (3) ausgestattet ist, dadurch gekennzeichnet, daß die Mittel (3) aus einem am Ende der Längsträger (1) abmontierbar angebrachten Profilstahl bestehen, der in Bezug auf den einen oder anderen der genannten Längsträger winklig verschwenkbar ist, um zwischen den beiden Längsträgern freien Zugang zum vorderen und/oder rückwärtigen Teil des Richtsystems zu gewähren.

2. Richtsystem nach Anspruch 1, dadurch gekennzeichnet, daß jeder der beiden Längsträger (1) solchermaßen gestaltet ist, daß ein mittlerer Abschnitt (1a) gebildet wird, der in Bezug auf jeden Endabschnitt (1b) des jeweiligen Längsträgers als Rücksprung angeordnet ist.

3. Richtsystem nach Anspruch 2, dadurch gekennzeichnet, daß die äußeren Seitenflächen der Längsträger (1) direkt oder mittels Anbau durch eine Führungsschiene (4) gebildet werden, die zur Aufnahme von Stütz-, Positionier- Montage- oder sonstigen Organen mit Möglichkeit zur Positionierung durch gezieltes Verschieben geeignet ist.

4. Richtsystem nach Anspruch 1, dadurch gekennzeichnet, daß die Oberseite (1c) jedes Längsträgers über ihre gesamte Länge in einer geradlinigen Fluchtung eine Lauffläche (1e) aufweist, die zur Aufnahme von Halterungen (11) in Form von Bügeln geeignet ist, die zur Ermöglichung der Anbringung und Positionierung der Querträger (12) insbesondere ausgebildet sind.

5. Richtsystem nach Anspruch 2, dadurch gekennzeichnet, daß jeder jeweilige Endabschnitt (1b) jedes Längsträgers senkrecht am Ende eines Querträgers (2) befestigt ist und dadurch (in Draufsicht betrachtet) eine U-förmige Öffnung eingrenzt, wobei die zu den jeweiligen Enden gehörigen U-förmigen Öffnungen durch den senkrecht zu den Querträgern (2) in einer parallelen, in Bezug auf die von den genannten Endabschnitten gebildete Ebene versetzten Ebene befestigten mittleren Abschnitt (1a) verbunden und verstrebt werden.

6. Richtsystem nach Anspruch 1, dadurch gekennzeichnet, daß die Enden des genannten Stahls (3) ein Joch (3a) aufweisen, das zur Anlenkung am Ende jeder Führungsschiene (4) ausgestattet ist.

7. Richtsystem nach Anspruch 3, dadurch gekennzeichnet, daß die Führungsschiene (4) einen C-förmigen Querschnitt aufweist, der zur freies Gleiten gestattenden Aufnahme eines Gleitkörpers (10) geeignet ist, der mit einer Achse (8) fest verbundenen ist, die zur Ermöglichung der Befestigung von Stütz-, Positionier-, Montage- und sonstigen Organen mittels eines Verkeilungssystems geeignet ist.

8. Richtsystem nach Anspruch 4, dadurch gekennzeichnet, daß der Halterungsbügel (11) einen U-förmigen Querschnitt aufweist, um paarweise das Zentrieren und Positionieren des komplementären rechtwinkligen Querschnitts der Querträger (12) zu ermöglichen, wobei jeder Bügel mit Lauforganen ausgestattet ist, die mit der genannten Lauffläche (1e), nämlich einer Rinne, zusammenwirken.

9. Richtsystem nach Anspruch 1, ausgerüstet mit Querträgern (12) nach dem Baukastensystem und mit abmontierbaren, aus rohrförmigen Elementen rechtwinkligen Querschnitts bestehenden Beschlägen (19) und (20), dadurch gekennzeichnet, daß die Beschläge (19) insgesamt L-förmig sind mit zwei Schenkeln (19a) und (19b) ungleicher Länge, während die Stützbeschläge (20) insgesamt die Form eines asymmetrischen T besitzen, dessen Schenkel (20a) und (20b) von ungleicher Länge sind.

10. Richtsystem nach Anspruch 9 dessen Querträger (12) und/oder Beschläge (19) und (20) auf bekannte Weise eine Vielzahl von Löchern (12b) besitzen, die im Dickenmaß ihrer Oberseiten angeordnet sind auf eine Weise, die der Anordnung von an den vier Ecken einer Fußplatte (14a) von Stützorganen (14) gebohrten Löchern entspricht, dadurch gekennzeichnet, daß die Querträger und die Beschläge an jeder ihrer Seitenflächen Durchgangslöcher aufweisen, die im unteren Bereich in gleichem Abstand zu den beiden, den Löchern eines Beschlages entsprechenden Löchern angeordnet sind, wobei die genannten Löcher zur Aufnahme von Stiften (17) und (18) geeignet sind, die eine Spannbrücke (15) mit Schnellspannsystem nach einer Ausführungsart mit Exzenter (16) aufweist.

11. Richtsystem nach Anspruch 10, dadurch gekennzeichnet, daß die Brücke (15) ausgehend von einer mit den senkrechten Flächen ihrer Querträger (12) und/oder Beschläge (19-20) zusammenwirkenden senkrechten Auflageebene (15a) gebildet wird, wobei der obere Bereich dieser Ebene zwei gebogene Laschen (15b) aufweist, die jeweils mit dem Stift (17) versehen sind, der mit den an der Oberseite der Querträger gebildeten Löchern zusammenwirkt, während ihr unterer Bereich den Stift (18) aufweist, der mit dem im unteren Bereich der Seitenflächen der genannten Querträger gebildeten Loch zusammenwirkt, wobei das exzentrische System (16) eine von außen betätigbare Scheibe umfaßt, um winklig verstellt werden zu können und dadurch in Verbindung mit den genannten Stiften eine Klemmwirkung zu erzeugen.

12. Richtsystem nach einem der Ansprüche 1 oder 9, dadurch gekennzeichnet, daß der in Verbindung mit den Längsträgern montierte Querträger (12) und/oder die Stützarme (7) mit Kästen (21) mit Mitteln zur Sicherstellung der Positionierung und raschen Höheneinstellung der Spannzangen (22) ausgestattet sind, wobei diese Kästen (21) eine Öffnung (21a) aufweisen, deren Querschnitt komplementär zum Querschnitt der Querträger und der Stützarme ist, wobei diese Öffnung in Bezug auf den Kastenkörper versetzt oder nicht versetzt angeordnet sein kann.

13. Richtsystem nach Anspruch 12, dadurch gekennzeichnet, daß es sich bei den Mitteln um Spannbacken (21a) und (21b) handelt, die von elastischen Organen abhängig angeordnet sind, welche Steuermitteln zugeordnet sind, um gegenseitig verstellt werden zu können, um das Spannen eines Rohrs (24) sicherzustellen, das in seinem oberen Bereich mit der Zange ausgerüstet und außerdem mit Steuermitteln ausgestattet ist, die zur Sicherstellung der präzisen Höheneinstellung dieser Zange geeignet sind.

14. Richtsystem nach Anspruch 12, dadurch gekennzeichnet, daß es sich bei den Mitteln um einen Bolzen (27) handelt, der geeignet ist zum Zusammenwirken mit einer Mehrzahl von in der Höhe versetzten Löchern (24a), die im Dickenmaß eines Rohrs (24) gebildet sind, das frei gleitend in den Kasten (21) eingefügt ist, wobei dieses Rohr (24) im oberen Bereich mit der Zange ausgerüstet und außerdem mit Steuermitteln ausgestattet ist, die zur Sicherstellung der präzisen Höheneinstellung dieser Zange geeignet sind.

15. Richtsystem nach Anspruch 1, in dessen Längsträger Gewindelöcher gebohrt sind zur Aufnahme der Querträgern insbesondere, dadurch gekennzeichnet, daß Markierungen (26) angebracht sind gegenüber jedem Loch (1d) und den Löchern, die im unteren Bereich der Querträger (12) und/oder der Beschläge (19-20) gebildet sind.

16. Richtsystem nach Anspruch 1, dadurch gekennzeichnet, daß die Längsträger ausgehend von rohrförmigen Elementen quadratischen oder rechtwinkligen Querschnitts angefertigt sind.
